# EUROPEAN PATENT APPLICATION

(11) **EP 1 356 981 A2**
(43) Date of publication of application: **29.10.2003**
(21) Application number: 03252576.8
(22) Date of filing: 24.04.2003
(51) Int. Cl.: B60L 11/00, B60L 1/00

(54) **Power supply device for railway carriages and/or drive units**

(30) Priority: 24.04.2002 DE 10218258
(71) Applicant: Bombardier Transportation GmbH, 13627 Berlin (DE)
(72) Inventor: Rudolf, Michael, 10711 Berlin (DE); Noack, Maik, 15913 Laasow (DE)
(74) Representative: Akers, Noel James

(57) **Abstract**

The invention relates to a power supply device for powering electrical loads in a railway carriage and/or drive unit having a train busbar (ZSS) and high-voltage converters (HSR) which are connected to the train busbar (ZSS) and in each case convert different DC or AC voltages, which are supplied via the train busbar, to a standard DC voltage. In order to simplify and to standardize such power supply devices and in order to achieve a reduction in the physical volume and mass of the apparatuses used for power conversion and of the wiring, the railway carriage or drive unit according to the invention is equipped with a carriage-internal busbar (WSS), which is used for supplying voltage to the electrical loads and which is in each case connected to the train busbar (ZSS) via a high-voltage converter (HSR).

## Description

The invention relates to a power supply device for powering electrical loads in a railway carriage and/or drive unit having a train busbar and high-voltage converters which are connected to the train busbar and in each case convert different DC or AC voltages, which are supplied via the train busbar, to a standard DC voltage.

A power supply device such as this is known, for example, from DE 38 32 442 A1. In the known power supply device, one of the four UIC voltages (1500 V DC, 3000 V DC, 1500 V - 50 Hz, 1000 V - 16²/₃ Hz) is supplied via a train busbar. AC voltages are rectified via an input rectifier, which is followed by a step-down controller which uses two series-connected and capacitively coupled GTO thyristors to convert the various DC voltages to a standard intermediate-circuit voltage. Two three-phase inverters are used to produce a sinusoidal voltage from this intermediate-circuit voltage by pulse-width modulation and by means of L-C filters. This sinusoidal voltage is passed on to the loads, through transformers to provide DC isolation. Apart from a battery charger, an air-conditioning system and plug sockets for a power supply system voltage, inter alia, are connected to the transformers.

The present invention is based on the object of specifying a power supply device with a multiple system capability for powering electrical loads in a railway carriage and/or a drive unit, which leads to simplification and standardization as well as to a reduction in the physical volume and mass of the apparatuses which are used for power conversion, and of the wiring.

According to the invention, this object is achieved by a power supply device having the features of Claim 1. The power supply device according to the invention is thus characterized essentially in that the railway carriage and/or drive unit is equipped with a carriage-internal busbar, which is used for supplying voltage to the electrical loads and which is in each case connected to the train busbar via a high-voltage converter. The power which is fed into the train busbar is thus converted on a carriage basis, to be precise to a DC voltage with a rated value in the range from 540 V to 750 V DC, preferably to a DC voltage of 670 V, by means of a high-voltage converter with medium-frequency DC isolation.

Medium-frequency DC isolation - instead of the conventional low-frequency DC isolation - makes it possible to reduce the physical volume and mass of magnetic components. In particular, the power supply device according to the invention results in reduced wiring complexity, since, apart from the train busbar cable which is required in any case, only one through-cable need be installed per carriage, with a smaller cross section, as the busbar within the carriage.

Supplying the electrical loads in a railway carriage or drive unit via a busbar within the carriage and which is in each case fed via a high-voltage converter from the train busbar provides the power supply device with a modular structure. It is thus possible to provide a modular power supply system with a multiple system capability, both for trains with drive units and for undriven individual carriages in trains which are connected to locomotives, with decentralized conversion and optional decentralized traction coupling. The train busbar may be fed either with 1000 volts at 16.7 Hz / 22 Hz / 50 Hz or with 1500 volts at 50 Hz AC from the train power supply system winding (train busbar winding) of the main transformer in the locomotive, or else with DC voltage with a rated value in the range from 1500 volts to 3000 volts, directly from the overhead line or from the traction intermediate circuit in a locomotive vehicle, or from the generator voltage of a diesel locomotive.

One advantageous refinement of the power supply device according to the invention is to connect the busbar within the carriage to at least one inverter, which supplies an electrical load with AC voltage and is integrated in the electrical system for the load. The inverter may, in particular, be a variable-frequency inverter which is integrated in an air-conditioning system. Integration of the inverter in the air-conditioning system and the matching to the air-conditioning system once again make it possible to reduce the physical volume and, furthermore, to reduce the power consumption.

Further preferred advantageous refinements of the power supply device according to the invention are specified in the dependent claims.

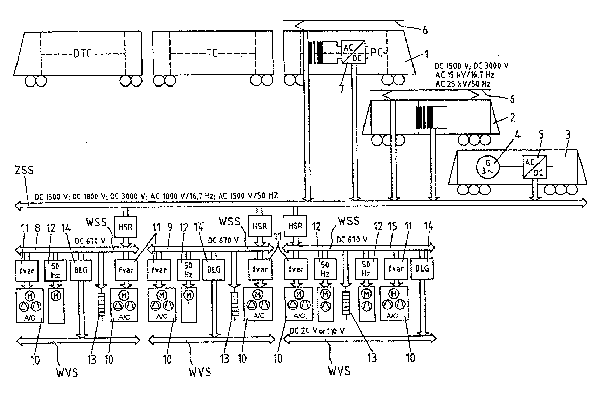

The invention will be explained in more detail in the following text with reference to a drawing, which illustrates a number of exemplary embodiments. The single figure of the drawing shows a schematic illustration of a power supply device according to the invention for powering electrical loads in an electrical multiple-unit train 1, or in railway carriages and an associated locomotive 2, 3. The locomotive may be an electric locomotive 2 or a diesel locomotive 3. The schematically illustrated diesel locomotive 3 has a three-phase generator 4 which is driven by the diesel engine, and to which a rectifier 5 can be connected which converts the three-phase produced by the generator 4 to direct current.

The pantographs which are arranged on the roof of the schematically illustrated electric locomotive vehicles 1, 2 provide the electrical connection between the overhead line 6 (traction line) and the electrical system in the respective locomotive vehicles 1, 2. The traction-wire voltage which is supplied via the overhead line 6 may be a DC voltage of 1500 V or 3 kV, or an AC voltage at 15 kV, 16.7 Hz, or 25 kV, 50 Hz, or similar traction-wire voltages that are normally used for traction purposes in electric railways. The train power supply system winding of the locomotive vehicle 1 is connected to a controlled rectifier 7, which converts alternating current to direct current and is primarily for feeding the traction system.

In order to feed power on a train basis, the power supply device according to the invention first of all has a train busbar ZSS - as is known per se. The train busbar ZSS can be fed from various sources, to be precise with an AC voltage of 1000 V and 16.7 Hz/ 22 Hz/50 Hz, or with an AC voltage of 1500 V at 50 Hz, from the train power supply system winding (train busbar winding) of the main transformer in the locomotive vehicle 1, or else with a DC voltage of 3 kV or a DC voltage of 1500 V directly from the overhead line 6, or with a DC voltage with a rated value in the range from 1500 to 3000 V from the traction intermediate circuit of a locomotive vehicle, or from the generator voltage of a diesel locomotive 3.

The railway carriages and the associated locomotive vehicles 1 are each equipped with a busbar WSS within the carriage (the carriage's own busbar), which runs in parallel with the train busbar ZSS. The power supply device according to the invention thus has a modular structure. The busbars WSS are each connected via a dedicated high-voltage converter HSR, with medium-frequency DC isolation, to the train busbar ZSS. Each of the high-voltage converters HSR converts the power which is fed into the train busbar ZSS to, preferably, a DC voltage of 670 volts.

The busbars 8, 9 are busbars WSS within railway carriages, for example double-decker railway carriages. These busbars are each connected to two air-conditioners 10 via variable-frequency or fixed-frequency inverters 11. The air-conditioners 10 each have, inter alia, a compressor and a three-phase motor which drives the compressor. The variable-frequency or fixed-frequency inverter 11 is integrated in the air-conditioning system 10.

Furthermore, each of the busbars 8, 9 within the carriages is connected to an inverter 12 for converting a direct current at 670 volts to three-phase at 400 volts - 50 Hz. By way of example, this inverter 12 is connected by means of a three phase supply to a three-phase motor for an air compressor. The air compressor produces compressed air for operating a pneumatic carriage brake. The inverter 12 is preferably integrated in the electrical system for the air compressor. The inverter 12, or the three-phase power supply system which is formed by it, can also be connected in a manner which is known per se to relatively small electrical loads, and to plug sockets for such loads between one of the three outer conductors and a neutral conductor, in order to provide a single-phase supply. The voltage in this case is then 400 / √3 ≈ 230. Further loads, such as a supply for automatic sales machines, a bistro or a train restaurant, conference zone etc. can be represented in the same way.

Furthermore, the busbars 8, 9 within the carriages are each connected to an electrical space heater 13, namely the main heater for the relevant railway carriage, and to a battery charger 14 (BLG). The battery charger 14 is provided with a converter which converts the DC voltage of 670 volts on the busbar 8, 9 within the carriage to a DC voltage with a rated value in the range from 24 V to 110 V DC, thus feeding a supply busbar WVS within the carriage, and the carriage battery.

A similar modular, decentralized train power supply system structure is also used for a drive unit 1, which drives the railway carriages, in the illustrated exemplary embodiment. 15 denotes the busbar WSS within the drive unit. The busbar 15 is likewise connected to two air-conditioners 10 via variable-frequency or fixed-frequency inverters 11. The busbar 15 is furthermore also connected to an electrical space heater 13 and to a battery charger 14 (BLG), with the battery charger once again being provided with a converter which converts the DC voltage of 670 volts on the busbar 15 within the carriage to a DC voltage with a rated value in the range from 24 V to 110 V DC, hence feeding a supply busbar WVS within the drive unit, and the drive-unit battery.

Furthermore, the busbar 15 is connected to two inverters 12 in order to convert the DC voltage of 670 volts to three-phase at 400 volts and 50 Hz. The two inverters 12 are each connected to a three-phase motor, in order to drive a fan. The fan is used to supply cooling air to the traction system in the drive unit. The inverters may either be integrated in the loads, as described for the air compressor, or may be used to feed two or more fans, pumps etc. in groups, which are located physically close to one another and can be supplied by the same three-phase voltage.

Power matching in the power supply device according to the invention can be carried out in a simple manner by increasing or reducing the size in a modular manner. As the exemplary embodiment of the power supply device according to the invention which is illustrated in the drawing and has been described above shows, this device has the following advantages over conventional power supply devices of this generic type:
1. Multiple system capability, that is to say it can be used both for electric multiple-unit trains and for trains connected to locomotives, in particular diesel-electric locomotives, and is independent of the existing train busbar voltage;
2. Physical volume and mass reduction of magnetic components due to the use of medium-frequency DC isolation rather than low-frequency DC isolation;
3. Reduction in the wiring complexity (only one through-cable with a small cross section now required in addition to the train busbar which is present in any case;
4. Reduction in the electrical interfaces at the carriage junctions (only UIC interfaces for power and control);
5. Retention of the UIC interfaces even with a multiple-unit train concept; thus providing the capability to incorporate conventional railway carriages in multiple-unit trains:
6. Modulization by the use of standard sizes for the high-voltage converters;
7. Reduction in the power consumption as a result of integration and optimization of inverters in an associated air-conditioning system;
8. Reduction in the electrical interfaces in a railway vehicle and a hierarchical structure, thus improving redundancy and diagnosis;
9. Improved energy management in particular in multiple-unit trains (kinetic assistance and peak-load harmonization for air-conditioning systems, traction systems, heaters and braking systems);
10. Optional connection of traction systems to the train busbar in a multiple-unit train (with the train busbar being fed with direct current from a traction intermediate circuit or from an overhead line.

### List of reference symbols

- 1 -: Locomotive vehicle
- 2 -: Electric locomotive
- 3 -: Diesel locomotive
- 4 -: Three-phase generator
- 5 -: Rectifier
- 6 -: Overhead line
- 7 -: Controlled rectifier
- 8 -: Busbar within the carriage
- 9 -: Busbar within the carriage
- 10 -: Air-conditioner
- 11 -: Fixed-frequency or variable-frequency inverter
- 12 -: Inverter
- 13 -: Electrical space heater
- 14 -: Battery charger
- 15 -: Busbar
- BLG -: Battery charger
- ZSS -: Train busbar
- HSR -: High-voltage converter
- WSS -: Busbar within the carriage
- WVS -: Supply busbar within the carriage

## Claims

1. Power supply device for powering electrical loads in a railway carriage and/or drive unit having a train busbar (ZSS) and high-voltage converters (HSR) which are connected to the train busbar (ZSS) and in each case convert different DC or AC voltages, which are supplied via the train busbar, to a standard DC voltage, **characterized in that** the railway carriage or drive unit is equipped with a carriage-internal busbar (WSS), which is used for supplying voltage to the electrical loads and which is in each case connected to the train busbar (ZSS) via a high-voltage converter (HSR).

2. Power supply device according to Claim 1, **characterized in that** the train busbar (ZSS) in locomotive vehicles is fed directly from the traction intermediate circuit with a DC voltage with a rated value in the range from 1500 volts to 3000 volts.

3. Power supply device according to Claim 1, **characterized in that** the train busbar (ZSS) in railway carriages that are connected to locomotives is fed either with 1000 volts at 16.7 Hz / 22 Hz / 50 Hz or with 1500 volts at 50 Hz AC from the train power supply system winding (train busbar winding) of the main transformer in the locomotive, or else with DC voltage with a rated value in the range from 1500 volts to 3000 volts, directly from the overhead line (6) or from the traction intermediate circuit in a locomotive vehicle (1).

4. Power supply device according to one of Claims 1 to 3, **characterized in that** the high-voltage converter (HSR) provides conversion with medium-frequency DC isolation.

5. Power supply device according to one of Claims 1 to 4, **characterized in that** the high-voltage converter (HSR) provides conversion to a DC voltage in the range from 540 volts to 750 volts DC.

6. Power supply device according to Claim 5, **characterized in that** the high-voltage converter (HSR) provides conversion to a DC voltage with a rated value of 670 volts.

7. Power supply device according to one of Claims 1 to 6, **characterized in that** the busbar (WSS) within the carriage is connected to at least one variable-frequency or fixed-frequency inverter (11), for connection of an air-conditioning system (10) which is driven by a three-phase motor or motors.

8. Power supply device according to Claim 7, **characterized in that** the inverter (11) is integrated in the air-conditioning system (10).

9. Power supply device according to one of Claims 1 to 8, **characterized in that** the busbar (WSS) within the carriage is connected to at least one electrical space heater (13) and/or to at least one battery charger (BLG).

10. Power supply device according to Claim 9, **characterized in that** the battery charger (BLG) is provided with a voltage converter for feeding a supply busbar (WVS), which is within the carriage, and a carriage battery with a DC voltage in the range from 24 volts to 110 volts DC.

11. Power supply device according to one of Claims 1 to 10, **characterized in that** the busbar (WSS) within the carriage is connected to at least one inverter (12) for converting direct current to three-phase or alternating current.

12. Power supply device according to Claim 11, **characterized in that** the converter (12) provides conversion to a fixed-frequency or variable-frequency three-phase system.

13. Power supply device according to Claim 11 or 12, **characterized in that** the inverter (12) is integrated in the electrical system of the train power supplies.

14. Power supply device according to one of Claims 11 to 13, **characterized in that** the converter (12) is integrated in the electrical system of an air compressor or of a traction motor fan.
